Europäisches Patentamt

European Patent Office

Office européen des brevets

(19)

(11) EP 0 957 344 A2

(12) **EUROPÄISCHE PATENTANMELDUNG**

(43) Veröffentlichungstag:
17.11.1999 Patentblatt 1999/46

(51) Int. Cl.6: **G01D 5/353**

(21) Anmeldenummer: 99109030.9

(22) Anmeldetag: 07.05.1999

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 15.05.1998 DE 19821616

(71) Anmelder:
• JENOPTIK Aktiengesellschaft
07743 Jena (DE)

• INSTITUT FÜR PHYSIKALISCHE HOCHTECHNOLOGIE E.V.
07743 Jena (DE)

(72) Erfinder:
• Ecke, Wolfgang
07747 Jena (DE)
• Görlich, Steffen
07743 Jena (DE)
• Belke, Siegfried
07747 Jena (DE)

(54) **Anordnung zur Bestimmung von Temperatur und Dehnung einer optischen Faser**

(57) Die Erfindung betrifft eine Anordnung zur simultanen optischen Bestimmung von Temperatur und Dehnungsschwingungen einer optischen Faser für eine präzise Ermittlung der Änderungen von Umgebungseinflüssen und/oder Faserbelastungen.

Die Aufgabe der Erfindung, die zwei unterschiedlichen Meßaufgaben der absoluten Messung einer stationären Größe, wie der Temperatur, und der relativen, hochauflösenden Messung schnell veränderlicher Größen von Schwingungsvorgängen mit vergleichbarer Genauigkeit in einer einzigen optischen Anordnung zu realisieren, wird erfindungsgemäß gelöst, indem ein Spektrometer (6) mit einem abbildenden, spektral dispersiven Element (63) verwendet wird, wobei ein erstes Eingangslichtbündel (61) bezüglich des dispersiven Elements (63) so angeordnet ist, daß das am dispersiven Element (63) spektral zerlegte Licht auf eine erste zeilenförmige Empfängeranordnung (64) abgebildet wird und ein zusätzliches zweites Eingangslichtbündel (62) auf das dispersive Element (63) im Spektrometer (6) gerichtet ist, dessen spektral zerlegtes Licht auf eine zur ersten parallele zweite lineare Empfängeranordnung (65) fällt, beiden Eingangslichtbündeln (61; 62) Licht von einer breitbandigen Lichtquelle (1), das von mindestens zwei optischen Fasergittern (41; 42) mit verschiedenen mittleren Wellenlängen reflektiert wurde, zugeführt wird und mindestens im Lichtweg des zweiten Eingangslichtbündels (62) vor der spektralen Zerlegung mittels des dispersiven Elements (63) eine Interferometeranordnung (5) mit Phasenmodulation und unterschiedlichen Armlängen vorhanden ist, deren Auswertung über die zweite Empfängeranordnung (65) mittels Phasendemodulationsmodulen (72) bezüglich relativer Änderungen der Bragg-Wellenlängen erfolgt, während ein CCD-Auswertemodul (71) zur Bestimmung der absoluten Bragg-Wellenlängen der optischen Fasergitter (4) der ersten Empfängeranordnung (64) nachgeordnet ist.

Fig. 4

EP 0 957 344 A2

## Beschreibung

Die Erfindung betrifft eine Anordnung zur simultanen optischen Bestimmung von absoluten physikalischen Zustandsgrößen und relativen Änderungen physikalischer Größen in einer optischen Faser, insbesondere zur Bestimmung von Temperatur und Dehnungsschwingungen einer optischen Faser für eine präzise Ermittlung der Änderungen von Umgebungseinflüssen und/oder Faserbelastungen. Die Erfindung findet vorzugsweise Anwendung in Prozessen, bei denen eine aktuelle Erfassung von zufälligen Temperatur- und Druckschwankungen oder Faserbeanspruchungen erwünscht oder notwendig ist.

Es ist seit langem bekannt, optische Fasern und Fasergitter zur Messung von Temperatur oder Dehnung einzusetzen (Fiber optic and laser sensors VII, Proc. of SPIE, Vol. 1169 (1989), S.98-107), wobei geeignete absolut messende optische Spektralanalysatoren (Kantenfilter, Gitterspektrometer, Fabry-Perot-Etalons) zur Bestimmung der Bragg-Wellenlänge und des daraus durch Rechnung oder Kalibrierung sich ergebenden Wertes der Zustandsgröße benutzt werden. Übliche Grenzen der Auflösung und Genauigkeit dieser Verfahren betragen etwa 1 bis 10 pm für die Bragg-Wellenlänge und damit ungefähr 0,1 bis 1 K für die Temperatur und 0,5 bis 5 $\mu\epsilon$ für die relative Dehnung. Mehrere optische Fasergitter entlang einer Lichtleitfaser können gleichzeitig ausgewertet werden, indem deren Bragg-Wellenlänge stark (einige nm) unterschiedlich ausgeführt wird, so daß diese Reflexe unabhängig voneinander spektral meßbar sind. Diese Verfahren sind durch A. D. KERSEY et al. („Multiplexed fiber Bragg grating strain-sensor system with a fiber Fabry-Perot wavelength filter", in: Optics Letters 18 (1993) 16, S. 1370-1372) als Wellenlängen-Multiplexing der Einzelsensoren und anschließendes Demultiplexing der Meßsignale bekannt geworden.

Weiterhin ist aus Electronic Letters 28 (1992) 3, S. 236-238 (A. D. KERSEY et al.: „High resolution fiber grating based strain sensor with interferometric wavelength-shift detection") bekannt, Dehnungsschwingungen durch präzise Wellenlängenauflösung zu bestimmen, indem das Licht in Interferometer mit unsymmetrischen Armlängen eingespeist wird und aus dem zeitlichen Verlauf der resultierenden optischen Phasendifferenz am Interferometerausgang auf den zeitlichen Verlauf der Änderung der Zustandsgröße geschlossen werden kann. Übliche Auflösungsgrenzen betragen dann 1 bis 10 n$\epsilon$ für die Amplitude einer Dehnungsschwingung im Frequenzbereich oberhalb 10 Hz.

Zur gleichzeitigen Auswertung mehrerer optischer Fasergitter wurden nach einer Veröffentlichung von T. A. BERKOFF et al. (in: IEEE Photonics Technology Letters 8 (1996) 11, S. 1522-1525, „Fiber Bragg grating array sensor system using a bandpass wavelength division multiplexer and interferometric detection") dem Interferometer Wellenlängenfilter nachgeschaltet, um die optische Phase der verschiedenen Wellenlängenkomponenten der verschiedenen optischen Fasergitter separat zu bestimmen.

Aufgabe der Erfindung ist es, die zwei unterschiedlichen Meßaufgaben der absoluten Messung einer stationären Größe, wie der Bragg-Wellenlänge oder der Temperatur, und der relativen, hochauflösenden Messung schnell veränderlicher Größen von Schwingungsvorgängen mit vergleichbarer Genauigkeit in einer einzigen optischen Anordnung zu realisieren.

Erfindungsgemäß wird die Aufgabe bei einer Anordnung zur optischen Bestimmung einer absoluten physikalischen Zustandsgröße in einer optischen Faser mit einem optischen Spektralanalysator zur Ermittlung unterschiedlicher Bragg-Wellenlängen von Fasergittern, die unterschiedliche mittlere Wellenlängen aufweisen und an denen das die optische Faser durchlaufende Licht reflektiert wird, sowie Mitteln zur Berechnung der absoluten physikalischen Größe aus den ermittelten Bragg-Wellenlängen, dadurch gelöst, daß der optische Spektralanalysator ein Spektrometer mit einem abbildenden, spektral dispersiven Element ist, wobei ein erstes Eingangslichtbündel bezüglich des dispersiven Elements so angeordnet ist, daß das am dispersiven Element spektral zerlegte Licht auf eine erste zeilenförmige Empfängeranordnung abgebildet wird, daß ein zusätzliches zweites Eingangslichtbündel auf das dispersive Element im Spektrometer gerichtet ist, dessen spektral zerlegtes Licht auf eine zur ersten parallele zweite lineare Empfängeranordnung fällt, daß beide Eingangslichtbündel vom Licht einer breitbandigen Lichtquelle, das von mindestens zwei optischen Fasergittern mit verschiedenen mittleren Wellenlängen reflektiert wurde, versorgt sind, daß mindestens im Lichtweg des zweiten Eingangslichtbündels vor der spektralen Zerlegung mittels des dispersiven Elements eine Interferometeranordnung mit einer Phasenmodulation und unterschiedlichen Armlängen vorhanden ist, wobei der Auswerteteil der Interferometeranordnung der diesem Eingangslichtbündel zugeordneten zeilenförmigen Empfängeranordnung nachgeordnet ist, daß der ersten Empfängeranordnung eine Signalverarbeitungseinheit zur Bestimmung der absoluten Bragg-Wellenlängen der optischen Fasergitter und Errechnung einer davon abhängigen physikalischen Größe nachgeschaltet ist, und daß der zweiten Empfängeranordnung nachgeordnet ein Phasendemodulationsmodul für eine Auswertung von Interferometersignalen zur Bestimmung von relativen Änderungen der Bragg-Wellenlängen der optischen Fasergitter und Errechnung der relativen Änderungen einer physikalischen Größe vorgesehen ist.

Vorzugsweise werden bei einer gewählten Meßaufgabe als absolute physikalische Größe die Temperatur und als relative physikalische Größe die relative Dehnung der optischen Faser ermittelt.

Die optischen Fasergitter sind zweckmäßig innerhalb der optischen Faser, die als Meßstelle fungiert, angeordnet.

Als abbildendes dispersives Element ist ein Prisma geeignet. In einer besonders vorteilhaften Variante wird als dispersives Element ein abbildendes Reflexionsgitter verwendet.

Als Interferometeranordnung wird vorteilhaft ein Mach-Zehnder-Interferometer, das zwei Ausgänge aufweist, eingesetzt, wobei das erste und das zweite Eingangslichtbündel des Spektrometers jeweils von einem der Ausgänge des Mach-Zehnder-Interferometers gebildet wird.

Als Interferometeranordnung ist gleichwertig ein Michelson-Interferometer einsetzbar.

Dabei ist es einerseits sinnvoll, daß der Ausgang des Michelson-Interferometers über einen zusätzlichen Verzweiger aufgeteilt und auf beide Eingangslichtbündel des Spektrometers geführt ist oder andernfalls der Lichtweg vorteilhaft vor der Aufteilung in Interferometerarme verzweigt ist, wobei dieser erste Abzweig dem ersten Eingangslichtbündel des Spektrometers zugeführt wird. Im letzteren Fall ergibt sich der Vorteil daß das erste Eingangslichtbündel keinerlei interferometrische Modulation aufweist, so daß Restriktionen bezüglich der Auslesung der ersten Empfängeranordnung entfallen

Die Interferometeranordnung kann auch zweckmäßig in Freistrahloptik mit Spiegelelementen ausgeführt werden, wobei vorzugsweise eine mechanische Verschiebeeinheit als Phasenmodulator zur periodischen Änderung der optischen Weglänge eines Interferometerarmes mittels Spiegelverschiebung vorgesehen ist. Die periodische Spiegelbewegung erfolgt dabei zweckmäßig piezoelektrisch.

Es ist besonders vorteilhaft, wenn die Freistrahloptik als Mach-Zehnder-Interferometer ausgebildet und im Spektrometer integriert ist und die Ausgänge des Interferometers die Eingangslichtbündel des Spektrometers darstellen.

Eine weitere vorteilhafte Variante ergibt sich, wenn die Interferometeranordnung aus Lichtleitfasern und Verzweigern aufbaut ist. Dabei sind die Lichtleitfasern vorzugsweise Monomodefasern.

Die Interferometeranordnung enthält zweckmäßig mindestens in einem Interferometerarm einen optischen Phasenmodulator. Als Phasenmodulatoren werden vorzugweise elektro-optische oder piezoelektrisch angetriebene faseroptische Modulatoren eingesetzt.

Es erweist sich als günstig, wenn die Interferometeranordnung einen Phasenmodulator enthält, der mit einer Zweifrequenz-Sinusmodulation ansteuerbar ist, und die Interferometersignale auf einem gemeinsamen Vielfachen der zwei Frequenzen auswertbar sind.

Bei der Variante aus Lichtleitfasern sind vorteilhaft in beiden Interferometerarmen Phasenmodulatoren angeordnet, wobei die Phasenmodulatoren piezoelektrische Faserstrecker zur Realisierung eines symmetrischen Grundaufbaus der Interferometerarme sind und der eine Phasenmodulator im Gegentakt zum anderen Phasenmodulator angesteuert wird.

Als erste Empfängeranordnung der erfindungsgemäßen Anordnung wird vorzugsweise eine CCD-Zeile verwendet.

Die zweite Empfängeranordnung ist zweckmäßig ein Photodiodenarray. Daraus ergibt sich der Vorteil, daß die zweite Empfängeranordnung in Anzahl, Position und Breite der Lichteintrittsflächen ihrer Elemente an die Reflexe der unterschiedlichen optischen Fasergitter angepaßt werden kann, wobei dabei zusätzlich die erwarteten meßgrößenabhängigen Schwankungsbreiten (vorzugsweise Temperatur- oder Dehnungsänderungen) der Wellenlängen der Fasergitterreflexe berücksichtigt sind.

Zur Anpassung der Anzahl, Position und Breite der Lichteintrittsflächen der zweiten Empfängeranordnung an die Gegebenheiten der Fasergitterreflexe können Photodiodenzeilen in geeigneter Weise hergestellt oder bei Verwendung einer regulären Zeile nur bestimmte lichtempfindliche Elemente ausgewählt werden.

Eine elegantere Möglichkeit der Anpassung an die Gegebenheiten der Fasergitterreflexe ergibt sich, wenn optische Lichtleitfasern zur Einkopplung der Fasergitterreflexe auf die Empfängerzeile eingesetzt werden, wobei Fasern mit unterschiedlichen Durchmessern und Abständen an die Anzahl, Position und Größe der Fasergitterreflexe angepaßt sind, die Lichteintrittsflächen der Fasern in der durch das abbildende dispersive Element vorgegebenen Empfängerebene angeordnet und ihre Endflächen auf ein beliebig positioniertes lineares Empfängerarray gerichtet sind. In letzterem Fall kann das lineare Empfängerarray auch vorzugsweise eine Zeile mit regelmäßig angeordneten Elementen sein.

Die Grundidee der Erfindung resultiert aus der Überlegung, daß eine nahezu stationäre, absolute Zustandsgröße und eine schnellen Veränderungen unterliegende relative Größe nicht gleichzeitig mit beliebiger Genauigkeit gemessen werden können. Die vorliegende Erfindung löst dieses Problem, indem zwei an sich bekannte Meßmethoden mit nur geringem Aufwand in ein bekanntes Meßsystem integriert werden. Dabei können insbesondere mehrere optische Komponenten gleichzeitig für die verschiedenen Meßaufgaben verwendet werden, ohne Kompromisse bei der Meßgenauigkeit eingehen zu müssen.

Mit der erfindungsgemäßen Anordnung ist es möglich, das bekannte Wellenlängen-Demultiplexing sowohl für die absolute Messung von stationären Zustandsgrößen, wie der Temperatur, als auch für die Messung von schnell veränderlichen relativen Größen, wie sie Schwingungsvorgänge charakterisieren und bei Dehnungsvorgängen von Fasern auftreten, anzuwenden und getrennt hochauflösende Messungen dieser gegensätzlichen Größen durchzuführen.

Die Erfindung soll nachstehend anhand von Ausführungsbeispielen näher erläutert werden.

Die Zeichnungen zeigen:

Fig 1:      eine erfindungsgemäße Anordnung in ihrem Grundaufbau,

Fig. 2:     eine Variante der Erfindung mit vorgelagerten Mach-Zehnder-Interferometer und faseroptischer zweiter Empfängeranordnung,

Fig. 3:     eine vergrößerte Detailzeichnung der zweiten Empfängeranordnung mit Blickrichtung auf die lichtempfindlichen Elemente der Empfängeranordnungen,

Fig. 4:     eine vorteilhafte Ausführung der Erfindung mit Mach-Zehnder-Interferometer in Freistrahloptik und faseroptischem zweiten Empfänger und

Fig. 5:     eine weitere vorteilhafte Gestaltung der erfindungsgemäßen Anordnung mit vorgeordnetem Michelson-Interferometer und faseroptischem zweiten Empfänger.

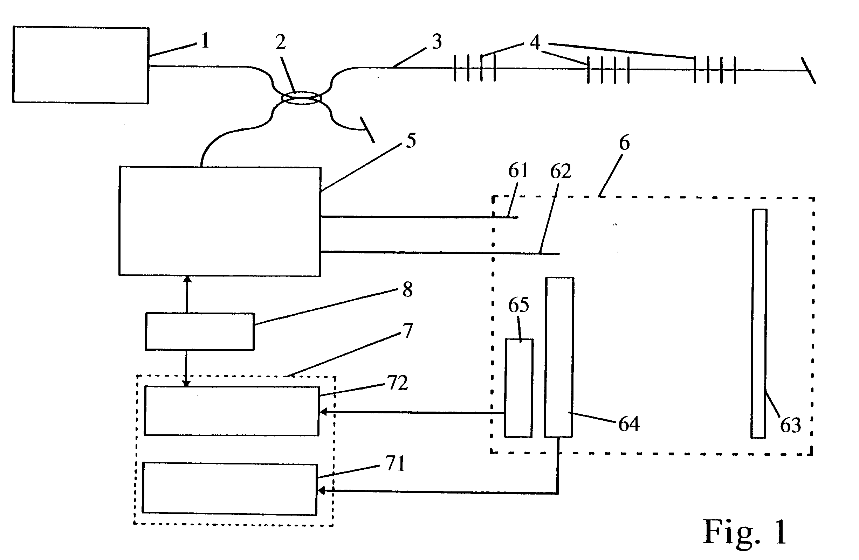

Die erfindungsgemäße Anordnung besteht in ihrem Grundaufbau, wie in Fig. 1 dargestellt, aus einer breitbandigen Lichtquelle 1, einem Faserkoppler 2 zum Einkoppeln des Lichts der Lichtquelle 1 in eine optische Faser 3 mit Fasergittern 4 und zum Auskoppeln des an den Fasergittern 4 reflektierten Lichts, einer Interferometeranordnung 5, einem Spektralanalysator 6, der zwei Eingangslichtbündel 61 und 62, ein abbildendes dispersives Element 63 und zwei parallele Empfängeranordnungen 64 und 65 aufweist, sowie einer Auswerteeinheit 7, die zwei unterschiedliche Auswertemodule enthält, einen üblichen CCD-Auswertemodul 71 für den normalbetriebenen Spektralanalysator 6 und einen Phasendemodulationsmodul 72 für eine interferometrische Auswertung.

Die breitbandige Lichtquelle 1, die vorzugsweise eine Superlumineszenzdiode ist und in diesem Fall z.B. einen Emissionsbereich von 820 bis 855 nm aufweist, gibt ihr Licht in eine Lichtleitfaser ab. Dieses Licht wird über den Faserkoppler 2 in eine optische Faser 3 eingekoppelt, die als eigentliche Sensorstrecke in gewünschtem Abstand über wenigstens zwei sensibilisierte Teilabschnitte von wenigen Millimetern Länge, die bereits erwähnten optischen Fasergitter 4, verfügt. Die Fasergitter 4 werden zweckmäßig in konventioneller Spleißtechnik in die an sich passive Lichtleitfaser eingefügt und sind mit unterschiedlichen Bragg-Wellenlängen ausgeführt. Zum Beispiel unterscheiden sich benachbarte Fasergitter 4 vorteilhaft um jeweils 6 nm in ihrer Bragg-Wellenlänge. Der Wellenlängenbereich richtet sich nach der verfügbaren Bandbreite der Lichtquelle 1.

Das von den Fasergittern 4 zurückreflektierte Licht wird durch den Faserkoppler 2 wieder aus der Faser 3 ausgekoppelt und einer Interferometeranordnung 5 zugeführt. Diese Interferometeranordnung 5 verfügt - bei ansonsten beliebiger Funktionsart - über einen optischen Eingang, zwei optische Teiler 51 und 52 zur Aufteilung des Lichts aus der Faser 3 in zwei Lichtwege, Erzeugung zweier Interferometerarme 53 und 54 mit unterschiedlicher optischer Weglänge und Überlagerung des Lichts aus den zwei Interferometerarmen 53 und 54 sowie über mindestens einen Phasenmodulator 55 in einem der Interferometerarme. Die Interferometeranordnung 5 liefert zwei optische Ausgänge, die im Spektralanalysator 6 als eingehende Lichtbündel 61 und 62 jeweils einer Spektralzerlegung unterworfen werden.

Im Spektralanalysator 6, der vorzugsweise ein Gitterspektrometer mit einem abbildenden Reflexionsgitter 66 als dispersivem Element 63 ist, wird das Licht beider Eingangslichtbündel 61 und 62 aufgrund deren räumlichen Versatzes gegenüber dem dispersiven Element 63 in zwei getrennte, parallel zueinander liegende streifenförmige Spektren zerlegt, die auf eine erste bzw. eine zweite Empfängeranordnung 64 bzw. 65 abgebildet werden. Während die erste Empfängeranordnung 64, die eine in Gitterspektrometern übliche CCD-Zeile 67 ist, die Wellenlängenverteilung des ersten Eingangslichtbündels 61 erfaßt und sich damit zur Auswertung langsamer (f<10 Hz) und dabei relativ großer Änderungen (>1 pm) der Bragg-Wellenlängen der optischen Fasergitter 4 eignet, nimmt die zweite Empfängeranordnung 65, die vorteilhaft ein lineares Photodiodenarray 68 ist, die schnellen Änderungen der Bragg-Wellenlänge der optischen Fasergitter 4 durch Bestimmung der optischen Phasenverschiebungen, die infolge des Durchlaufens der unterschiedlichen Interferometerarme der Interferometeranordnung 5 nachweisbar sind, auf. Die interferometrische Auswertung kann grundsätzlich auch zur Erhöhung der Auflösung stationärer Messungen verwendet werden, erfordert dann jedoch eine thermische Stabilisierung des Interferometers 5.

Ohne Einschränkung der Allgemeinheit soll in den folgenden Beispielen die breitbandige Lichtquelle stets als Lumineszenzdiode 1 bezeichnet werden.

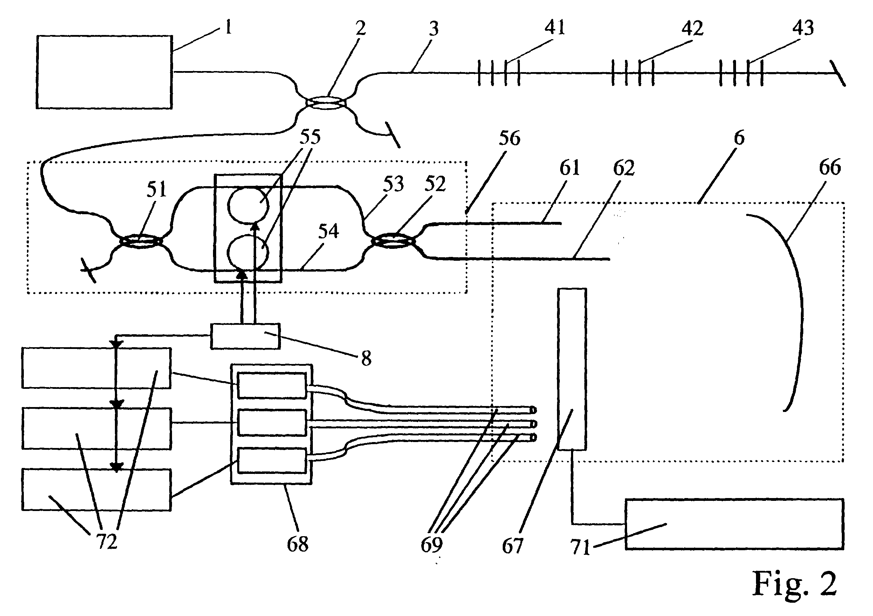

In Fig. 2 ist eine vorteilhafte Ausführungsform der erfindungsgemäßen Anordnung dargestellt, die sich gegenüber Fig. 1 durch die Wahl einer speziellen Interferometeranordnung 5 und einer zweckmäßigen zweiten Empfängeranordnung 65 auszeichnet.

Durch den Faserkoppler 2, der hier vorzugsweise ein 1:1 -Koppler sein soll, wird in oben beschriebener Weise das breitbandige Licht der Lumineszenzdiode 1 in die optische Faser 3 eingekoppelt, die in diesem Beispiel drei Fasergitter 41, 42 und 43 enthält. Die Reflexe dieser Fasergitter 41, 42 und 43 werden ebenfalls mit Hilfe des Faserkopplers 2 im Verhältnis 1:1 ausgekoppelt und der Interferometeranordnung 5 zugeführt. Letztere ist in diesem Fall ein faseroptisches Mach-Zehnder-Interferometer 56, das in bekannter Weise aus Monomode-Lichtleitfasern aufgebaut sein kann und bei dem sich zwischen zwei optischen Teilern 51 und 52 Interferometerarme 53 und 54 mit unterschiedlicher optischer Weglänge befinden, von denen mindestens einer einen Phasenmodulator 55 aufweist. Dieser Phasenmodulator 55, der z.B. bei einer Frequenz von 40 kHz eine Amplitude der Phasenmodulation von 2,8 rad erzeugt, ist vorzugsweise ein piezoelektrischer Faserstrecker.

Vorteilhaft ist zur Erhaltung einer symmetrischen Struktur des Mach-Zehnder-Interferometers 56 in jedem Interferometerarm 53 und 54 ein solcher Faserstrecker enthalten, wobei diese beiden Phasenmodulatoren 55 im Gegentakt betrieben werden.

Aufgrund der ungleichen optischen Längen der Interferometerarme 53 und 54 liefert eine bestimmte Verschiebung der Bragg-Wellenlänge $\delta\lambda_B$ bei zunehmender Armlängendifferenz $\Delta L$ eine zunehmende Verschiebung der optischen Phasendifferenz $\Delta\varphi$, wenn die Signale der beiden Interferometerarme 53 und 54 mittels des Faserkopplers 52 überlagert werden:

$$\Delta\varphi = 2\pi \cdot \delta\lambda_B \cdot n \cdot \Delta L/\lambda_B{}^2 \qquad (1)$$

Die maximal verwendbare Armlängendifferenz $\Delta L$ ist allerdings durch die zur Interferenz notwendige Kohärenz der Bragg-Reflexe begrenzt. Deshalb sollte die Größe $n \cdot \Delta L$ (wobei n der effektive Brechungsindex der Lichtleitfaser des Mach-Zehnder-Interferometers 56 ist) nicht wesentlich größer als die Kohärenzlänge $L_k$ gewählt werden, da sonst der Kontrast des Interferenzsignals stark abnehmen würde:

$$L_k = \lambda_B{}^2/\Delta\lambda_B \qquad (2)$$

Im Beispiel betragen $L_k$ = 6,9 mm und n = 1,46, so daß $\Delta L$ = 3 mm gewählt werden kann.

Nach der Überlagerung des modulierten Lichts der beiden Interferometerarme 53 und 54 im Faserkoppler 52 wird das somit entstandene Interferenzsignal - zugleich in zwei Lichtwege aufgeteilt - an den Spektralanalysator 6 weitergeleitet.

Im Spektralanalysator 6, der in diesem Fall ein Spektrometer mit einem abbildenden holografischen Reflexionsgitter 66 als dispersivem Element 63 sein soll, wird das Licht von den zwei Interferometerausgängen über die zwei Eingangslichtbündes 61 und 62 eingeleitet, die senkrecht zur normalen Reflexionsebene des Reflexionsgitters 66 zu beiden Seiten dieser Reflexionsebene benachbart zueinander angeordnet sind. Das Licht vom ersten Eingangsbündel 61 wird am Reflexionsgitter 64 spektral zerlegt und auf die erste Empfängeranordnung 64 abgebildet, wobei letztere eine üblicherweise im Spektrometer 6 vorhandene CCD-Zeile 67 ist. Vom zweiten Eingangslichtbündel 62 bildet das Reflexionsgitter 66 das Licht auf die zweite Empfängeranordnung 65 ab, die parallel zur ersten Empfängeranordnung 64 und entsprechend dem Abstand der Eingangslichtbündel 61 und 62 zueinander versetzt angeordnet ist.

Ein in der Auswerteeinheit 7 enthaltener CCD-Auswertemodul 71 bestimmt im Spektrum die Lage der Maxima der sich durch ihre Wellenlängenbereiche um wenige Nanometer (z.B. 6 nm) unterscheidenden Bragg-Reflexe der Fasergitter 41, 42 und 43. Obwohl die CCD-Zeile 67 in der Regel einen Pixelmittenabstand von ca. 11 bis 14 $\mu$m aufweist, ist es aufgrund der Wellenlängendispersion des Spektrometers von 90 pm/Pixel und durch geeignete Rechnerverarbeitung (Fitting) möglich, eine Maximum-Bestimmung mit Fehlern um 1 pm zu erreichen. Damit sind relative stationäre Dehnungen bis ca. 1 $\mu\varepsilon$ meßbar. Diese Messung wird durch die Interferenzen des Mach-Zehnder-Interferometers 56 nicht beeinträchtigt, da die Phasenmodulation durch die Phasenmodulatoren 55 zu einer ausreichend konstanten mittleren Intensität auf der CCD-Zeile 67, die zweckmäßig auf eine Integrationszeit von mehr als 1 ms eingestellt ist, führt.

Für die zweite Empfängeranordnung 65 gibt es verschiedene sinnvolle Realisierungsmöglichkeiten, die im weiteren erläutert werden sollen.

Fig. 2 zeigt dazu eine einfache, vorteilhafte Variante, in der eine Übertragung des Lichts von der eigentlich erforderlichen zweiten Empfängerposition zum Photodiodenarray 68 mittels optischer Lichtleitfasern 69 vorgenommen wird. Dabei richtet sich die Anzahl der Elemente des Photodiodenarrays 68 nach der Anzahl der verwendeten Fasergitter 4 der optischen Faser 3. In diesem Fall sind deshalb infolge des Einsatzes von drei Fasergittern 41, 42 und 43 drei Faserenden von Lichtleitfasern 69, die entsprechend den abgebildeten Reflexen der Fasergitter 41, 42 und 43 in Größe und Lage dem Ort und der Schwankungsbreite der Fasergitterreflexe angepaßt sind, als wirksame Empfängerflächen erforderlich. Bei dieser Art und Weise der Konfiguration der zweiten Empfängeranordnung 65 können Faserdurchmesser und -position einfach geeignet justiert werden und der optoelektronische Empfänger, das Photodiodenarray 68, an beliebiger Stelle untergebracht werden. Bei dem oben gewählten mittleren Abstand Bragg-Wellenlängen der Fasergitter 41 bis 43 von 6 nm zueinander ist der metrische lineare Abstand der Bragg-Reflexe in der Empfängerebene 0,93 mm. Die Lichtleitfasern 69 müssen zum Zwecke einer optimalen Übertragung der Bragg-Reflexe auf das Photodiodenarray 68 einen Kerndurchmesser von 0,6 mm aufweisen und in einem Abstand von 0,93 mm so positioniert werden, daß jede dieser dicken Fasern jeweils genau einen Reflex der Fasergitter 41, 42 und 43 aufnimmt.

Nach der optoelektronischen Wandlung der Signale im Photodiodenarray 68 werden in separaten Phasendemodulationsmodulen 72 der Auswerteeinheit 7 die Interferenzsignale der einzelnen Elemente des Photodiodenarrays 68 einer Phasendemodulation unterzogen.

Dabei sind in der Auswerteeinheit 7 soviele Phasendemodulationsmodule 72 enthalten, wie Reflexe von verschiedenen Fasergittern 4 der optischen Faser 3 auszuwerten sind, in diesem Beispiel also drei. Zur Auswertung können bekannte Demodulationsverfahren, wie sie z.B. von KERSEY et al. (in: „High-resolution fibre-grating based strain sensor with interferometric wavelength-shift detection", Electronic Letters 28 (1992) 3, S.236-238) zum Nachweis von dehnungsinduzierten Wellenlängenänderungen in Fasern angegeben wurden, verwendet werden. Um eine hohe, intensitätsunabhängige Auflösung der optischen Phase bis in den prad-Bereich zu erreichen, wird eine periodische Phasenmodulation mit einer Frequenz von 40 kHz, gesteuert durch die Sinusmodulation eines Modulationsgenerators 8, im Interferometer 6 eingesetzt und sämtlichen Phasendemodulationsmodulen 72 üblicherweise diese Frequenz des Modulationsgenerators 8 gleichfalls als Referenz zugeführt.

Damit ergibt sich bei einer relativen Änderung der Bragg-Wellenlänge $\delta\lambda_B/\lambda_B = 3 \cdot 10^{-11}$ unter Anwendung der Voraussetzungen zu den Gleichungen (1) und (2) eine optische Phasenverschiebung $\Delta\varphi = 1\ \mu rad$. Praktisch sind somit Dehnungsschwingungen mit Amplituden von oberhalb 1 nm im Frequenzbereich von 100 Hz bis 5 kHz meßbar.

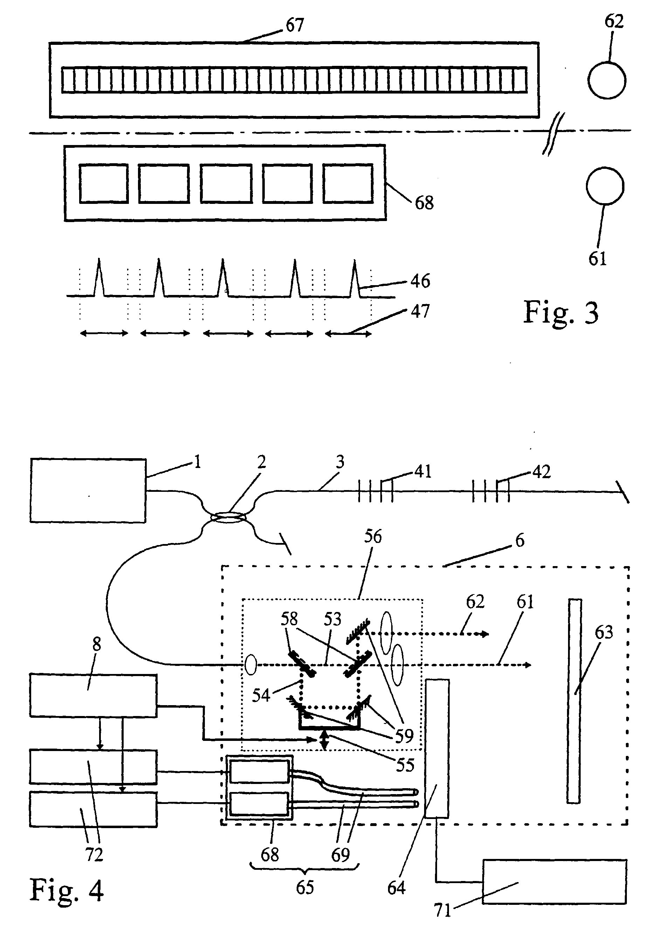

In Fig. 3 ist aus der Richtung des Lichteinfalls vom dispersiven Element 63 eine Draufsicht auf die erste und zweite Empfängeranordnung 63 und 64 dargestellt, um die geometrischen Verhältnisse von Abstand und Größe der lichtempfindlichen Elemente zu erläutern. Die Erläuterungen sollen unabhängig davon sein, ob ein lineares Photodiodenarray 68 direkt oder über optische Fasern 69 angekoppelt vorliegt, und insofern kann die zweite Empfängeranordnung 65 sowohl als speziell angepaßtes Photodiodenarray 68 als auch als lichtaufnehmende Enden von Lichtleitfasern 69, die sich in der Empfängerebene befinden, aufgefaßt werden. Ohne Einschränkung der Allgemeinheit soll in diesem Beispiel direkt ein Photodiodenarray 68 angenommen werden. Weiterhin sind zur Verdeutlichung der prinzipiellen Lage der Eingangslichtbündel 61 und 62 zu den beiden Empfängeranordnungen 64 und 65, die in allen übrigen Figuren wegen ihrer schematischen Darstellung nicht ausreichend klar entnehmbar sind, die Eingangslichtbündel 61 und 62 als Kreise dargestellt, wie sie als Faserenden im Falle der Verwendung von Lichtleitfasern sichtbar wären, wenn das Reflexionsgitter 66 der Standort des Betrachters ist. Bezüglich der normalen Reflexionsebene des Reflexionsgitters 66, die in Fig. 3 durch eine Strich-Punkt-Linie angedeutet ist, liegen das erste und das zweite Eingangslichtbündel 61 und 62 invers zur Anbringung der ersten und der zweiten linearen Empfängeranordnungen 64 und 65.

Unterhalb der beiden Empfängeranordnungen 64 und 65 sind zusätzlich die einfallenden schmalen Lichtbündel der diskreten Bragg-Reflexe 46 der Fasergitter 4 (hier: für fünf unterschiedliche Fasergitter 4) schematisch dargestellt sowie deren infolge der äußeren Einflüsse an den Meßstellen erwarteten Schwankungsbreiten 47 der Reflexe 46 angegeben. An diese beiden Größen werden die wirksamen Empfängerflächen des Photodiodenarrays 68 angepaßt. Die Anpassung erfolgt durch Wahl der jeweiligen Empfängerfläche des Photodiodenarrays 68 nach der Größe des Reflexes 46 und dessen Schwankungsbreite 47 sowie durch geeignete Positionierung der Empfängerflächen zueinander in Abhängigkeit von der Wellenlängendifferenz der Fasergitter 4. Die in der Beschreibung zu Fig. 2 gewählte mittlere Differenz zwischen den Bragg-Wellenlängen der Fasergitter 41 bis 43 soll hier auch für weitere (nicht dargestellte) Fasergitter 44 und 45 mit 6 nm vorausgesetzt werden, so daß der metrische lineare Abstand der Bragg-Reflexe in der Empfängerebene als einheitlich mit 0,93 mm angenommen werden kann und ein mit diesen Abstandsverhältnissen ausgewähltes oder speziell gefertigtes lineares Photodiodenarray 68 zum Einsatz kommt.

Eine weitere Variante der erfindungsgemäßen Anordnung ist der Fig. 4 entnehmbar. In diesem Beispiel werden mit der Superlumineszenzdiode 1 nur zwei optische Fasergitter 41 und 42 beleuchtet. Der wesentliche Unterschied gegenüber Fig. 2 besteht jedoch darin, daß in dieser Ausführungsform die Interferometeranordnung 5 im Spektrometer 6 integriert und als Freistrahlanordnung ausgeführt ist. Vorteilhaft wird in diesem Fall die vom Faserkoppler 2 kommende Lichtleitfaser in ein Mach-Zehnder-Interferometer 56 eingeleitet, in dem das aus der Lichtleitfaser über eine Kollimationsoptik ankommende Licht mittels optischer Teilerspiegel 58 und Umlenkspiegel 59 in zwei Interferometerarme 53 und 54 unterschiedlicher optischer Weglänge aufgeteilt, geführt und zur Überlagerung gebracht wird. Dabei wird das kollimierte Lichtbündel vom einem der Teilerspiegel 58 in einen ersten Interferometerarm 53 (gestrichelt) und einen zweiten Interferometerarm 54 (gepunktet) aufgeteilt. Während der erste Interferometerarm 53 den Teilerspiegel 58 geradlinig passiert und am anderen Teilerspiegel 58 nochmals geteilt wird, legt der zweite Interferometerarm 54 einen längeren optischen Weg über zwei mechanisch starr gekoppelte Umlenkspiegel 59 zurück, bevor er unter einem um 90° verschiedenen Winkel gegenüber dem ersten Interferometerarm 53 auf den zweiten Teilerspiegel 58 trifft. Die starr gekoppelten Umlenkspiegel 59 stellen gemäß diesem Beispiel einen Retroreflektor (parallele Rückreflexion des einfallenden Lichbündels) dar und sind an einer mechanische Verschiebeeinheit montiert, die den Lichtweg im zweiten Interferometerarm 54 periodisch verändert. Diese mechanische Verschiebung, die in Fig.3 mittels eines Doppelpfeiles stilisiert dargestellt ist, verkörpert in diesem freistrahloptischen Mach-Zehnder-Interferometer 56 den Phasenmodulator 55, wobei letzterer vorzugsweise piezoelektrisch ausgeführt ist. Dieser mechanische Phasenmodulator 55 wird, wie oben für elektrooptische Phasenmodulatoren 55 beschrieben, in geicher Weise von einem Modulationsfrequenzgenerator 8 angesteuert.

Der zweite Interferometerarm 54 wird am zweiten Teilerspiegel 58 ebenfalls geteilt und mit den beiden Teilstrahlen des ersten Interferometerarms 53 überlagert. Die Überlagerungsstrahlen werden anschließend mittels eines in einem der Strahengänge angeordneten weiteren Umlenkspiegels 59 parallel zueinander ausgerichtet und über Linsen fokussiert. Die so entstandenen zwei Ausgänge des Mach-Zehnder-Interferometers 56 stellen dann die realen Eingangslichtbündel 61 und 62 des Spektrometers 6 dar, deren Licht, wie in den vorigen Beispielen, auf das abbildende dispersive Element 63 fällt.

Alle weiteren Vorgänge gestalten sich in der bereits oben beschriebener Weise, wobei auch in diesem Beispiel als zweite Empfängeranordnung 65 wiederum ein Photodiodenarray 68 mit vorgeordneten Lichtleitfasern 69 eingesetzt ist. Dabei benötigt das Photodiodenarray 68 wegen der nur zwei vorhandenen Fasergitter 41 und 42 lediglich zwei aktive Elemente, und nachfolgend sind gleichfalls nur zwei Phasendemodulationsmodule 72 zur Auswertung erforderlich.

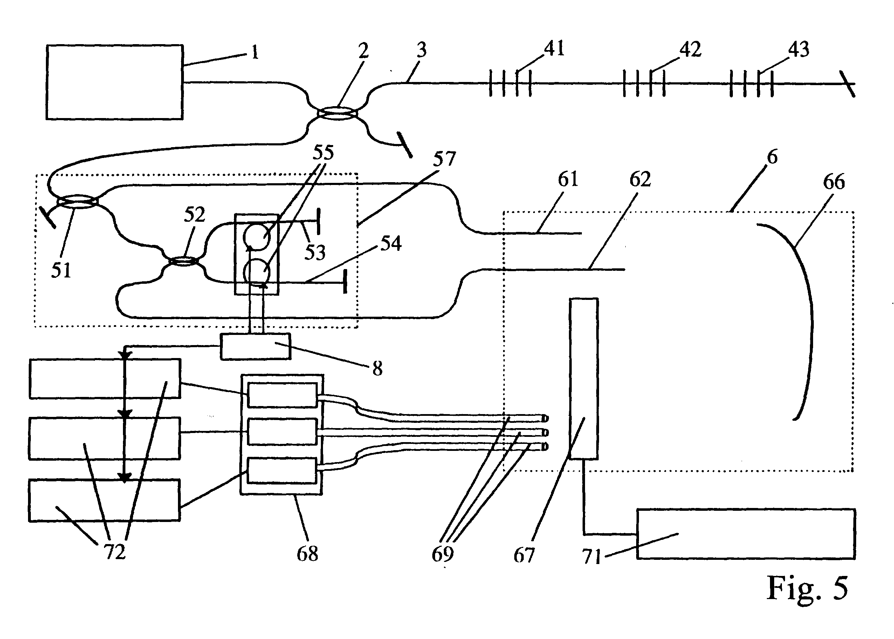

Fig. 5 basiert auf demselben Grundaufbau wie Fig.1 und deckt sich nahezu mit der Struktur von Fig. 2. Der wesentliche Unterschied besteht in der Gestaltung der Interferometeranordnung 5, die in diesem Fall nach dem Prinzip eines Michelson-Interferometers arbeitet. Das Michelson-Interferometer 57 ist vorteilhaft faseroptisch aufgebaut und enthält zwei Faserkoppler 51 und 52. Der Faserkoppler 51 verzweigt die vom Faserkoppler 2 kommende, die Bragg-Reflexe von den Fasergittern 41, 42 und 43 führende Lichtleitfaser gleich nach dem Interferometereingang und leitet eine Lichtleitfaser direkt auf den ersten Interferometerausgang durch. Die andere Lichtleitfaser vom Faserkoppler 51 wird sogleich dem zweiten Faserkoppler 52 zugeführt, um eine Teilung in zwei Interferometerarme 53 und 54 vorzunehmen und in diesen jeweils einen Phasenmodulator 55 anzuordnen, der infolge einer Endverspiegelung der Faserenden der Interferometerarme 53 und 54 jeweils zweimal vom Licht durchlaufen wird. Nach Rücklauf der modulierten, reflektierten Signale werden beide Interferometerarme 53 und 54 im Faserkoppler 52 überlagert und auf den zweiten Interferometerausgang des Michelson-Interferometers 57 ausgekoppelt. Beide Ausgänge bilden, wie in den Beispielen zuvor, die zwei Eingangslichtbündel 61 und 62 des Spektralanalysators 6, der in bereits oben beschriebener Weise arbeitet. Die Besonderheit liegt bei dieser Gestaltung darin, daß das erste Eingangslichtbündel 61 des Spektrometers 6 unmoduliert zur spektralen Zerlegung am abbildenden Reflexionsgitter 66 gelangt, womit sich Restriktionen bezüglich des Ausleseregimes der CCD-Zeile 67 (als erste Empfängeranordnung 64) erübrigen. Das modulierte Interferometerlicht erreicht also nur die zweite Empfängeranordnung 65, die hier wiederum aus Lichtleitfasern und einem nachgeordneten Photodiodenarray 68 zusammengesetzt ist. Die Ansteuerung der Phasenmodulatoren 55 über den Modulationsfrequenzgenerator 8 und Auswertung der Interferenzsignale erfolgen analog zu den anderen Ausführungsbeispielen.

Liste der verwendeten Bezugszeichen

| | |
|---|---|
| 1 | Lichtquelle |
| 2 | Faserkoppler |
| 3 | optische Faser |
| 4 | Fasergitter (Gesamtheit) |
| 41 | |
| 42 | Fasergitter (einzeln) |
| 43 | |
| 46 | Reflexe (der Fasergitter) |
| 47 | Schwankungsbreite (der Reflexe) |
| 5 | Interferometeranordnung |
| 51, 52 | optische Teiler |
| 53, 54 | Interferometerarm |
| 55 | Phasenmodulator |
| 56 | Mach-Zehnder-Interferometer |
| 57 | Michelson-Interferometer |
| 58 | Teilerspiegel |
| 59 | Umlenkspiegel |
| 6 | Spektrometer |
| 61, 62 | erstes, zweites Eingangslichtbündel |
| 63 | dispersives Element |
| 64, 65 | erste, zweite Empfängeranordnung |
| 66 | Reflexionsgitter |
| 67 | CCD-Zeile |
| 68 | Photodiodenarray |
| 69 | Lichtleitfasern (zum Photodiodenarray) |
| 7 | Auswerteeinheit |
| 71 | CCD-Auswertemodul |
| 72 | Phasendemodulationsmodul |
| 8 | Modulationsfrequenzgenerator |

**Patentansprüche**

1. Anordnung zur optischen Bestimmung einer absoluten physikalischen Zustandsgröße in einer optischen Faser mit einem optischen Spektralanalysator zur Ermittlung unterschiedlicher Bragg-Wellenlängen von Fasergittern, die unterschiedliche mittlere Wellenlängen aufweisen und an denen das die optische Faser durchlaufende Licht reflektiert wird, sowie Mitteln zur Berechnung der absoluten physikalischen Größe aus den ermittelten Bragg-Wellenlängen, dadurch gekennzeichnet, daß

   - der optische Spektralanalysator ein Spektrometer (6) mit einem abbildenden, spektral dispersiven Element (63) ist, wobei ein erstes Eingangslichtbündel (61) bezüglich des dispersiven Elements (63) so angeordnet ist, daß das am dispersiven Element (63) spektral zerlegte Licht auf eine erste zeilenförmige Empfängeranordnung (64) abgebildet wird,
   - ein zusätzliches zweites Einganglichtbündel (62) auf das dispersive Element (63) im Spektrometer (6) gerichtet ist, dessen spektral zerlegtes Licht auf eine zur ersten parallele zweite lineare Empfängeranordnung (65) fällt,

- beiden Eingangslichtbündeln (61; 62) Licht von einer breitbandigen Lichtquelle (1), das von mindestens zwei optischen Fasergittern (41; 42) mit verschiedenen mittleren Wellenlängen reflektiert wurde, zugeführt ist,

- mindestens im Lichtweg des zweiten Eingangslichtbündels (62) vor der spektralen Zerlegung mittels des dispersiven Elements (63) eine Interferometeranordnung (5) mit Phasenmodulation und unterschiedlichen Armlängen vorhanden ist, wobei der Auswerteteil der Interferometeranordnung (5) der diesem Eingangslichtbündel (62) zugeordneten zweiten Empfängeranordnung (65) nachgeordnet ist,

- der ersten Empfängeranordnung (64) ein Signalverarbeitungsmodul (71) zur Bestimmung der absoluten Bragg-Wellenlängen der optischen Fasergitter (4) und Errechnung einer davon abhängigen physikalischen Größe nachgeschaltet ist, und

- der zweiten Empfängeranordnung (65) nachgeordnet Phasendemodulationsmodule (72) für eine Auswertung von Interferometersignalen zur Bestimmung von relativen Änderungen der Bragg-Wellenlängen der optischen Fasergitter und Errechnung der relativen Änderungen einer physikalischen Größe vorgesehen sind.

2. Anordnung nach Anspruch 1, dadurch gekennzeichnet, daß
bei einer gewählten Meßaufgabe als absolute physikalische Größe eine Bestimmung der Temperatur und als veränderliche relative Größe eine Ermittlung von Dehnungsschwingungen der optischen Faser vorgesehen sind.

3. Anordnung nach Anspruch 1, dadurch gekennzeichnet, daß
die optischen Fasergitter (4) innerhalb der optischen Faser (3), die als Meßstelle fungiert, angeordnet sind.

4. Anordnung nach Anspruch 1, dadurch gekennzeichnet, daß
das abbildende dispersive Element (63) ein Prisma ist.

5. Anordnung nach Anspruch 1, dadurch gekennzeichnet, daß
das abbildende dispersive Element (63) ein abbildendes Reflexionsgitter (66) ist.

6. Anordnung nach Anspruch 1, dadurch gekennzeichnet, daß

als Interferometeranordnung (5) ein Mach-Zehnder-Interferometer (56), das zwei Ausgänge aufweist, vorhanden ist, wobei das erste und das zweite Eingangslichtbündel (61; 62) des Spektrometers (6) jeweils von einem der Ausgänge des Mach-Zehnder-Interferometers (56) gebildet werden.

7. Anordnung nach Anspruch 1, dadurch gekennzeichnet, daß
die Interferometeranordnung (5) ein Michelson-Interferometer (57) ist, das nach einer Aufteilung des Lichts von der optischen Faser auf die Eingangslichtbündel (61; 62) des Interferometers (6) im Lichtweg des zweiten Eingangslichtbündels (62) angeordnet ist.

8. Anordnung nach Anspruch 1, dadurch gekennzeichnet, daß
die Interferometeranordnung (5) ein Michelson-Interferometer (57) ist, dessen herkömmlicher Ausgang über einen Teiler (51) auf das zweite Eingangslichtbündel (62) des Spektrometers (6) gelegt ist und dessen vorhandener Lichtweg außerhalb der Interferometerarme (53; 54) verzweigt ist, um als erstes Eingangslichtbündel (61) dem Spektrometer (6) zugeleitet zu werden.

9. Anordnung nach Anspruch 1, dadurch gekennzeichnet, daß
die Interferometeranordnung (5) ein Michelson-Interferometer (57) ist, dessen Lichtweg am Eingang des Michelson-Interferometers (57) zweifach verzweigt ist, wobei ein erster Teiler (51) zur Schaffung eines direkten Lichtweges zum ersten Eingangslichtbündel (61) des Spektrometers (6) und eines zweiten Lichtweges zu einem zweiten Teiler (52) vorhanden ist, der zur Aufteilung des zweiten Lichtweges in zwei Interferometerarme (53;54) sowie nach Reflexion des Lichts in den Interferometerarmen zur Zusammenführung und Auskopplung auf einen dritten Lichtweg zum zweiten Eingangslichtbündel (62) des Spektrometers (6) vorgesehen ist.

10. Anordnung nach Anspruch 1, dadurch gekennzeichnet, daß
die Interferometeranordnung (5) ein Aufbau in Freistrahloptik mit Spiegelelementen (58; 59) ist, wobei eine mechanische Verschiebeeinheit als Phasenmodulator (55) zur periodischen Änderung der optischen Weglänge eines Interferometerarmes (54) mittels einer Spiegelverschiebung vorgesehen ist.

11. Anordnung nach Anspruch 10, dadurch gekennzeichnet, daß
die Freistrahloptik als Mach-Zehnder-Interferometer (56) ausgebildet und im Spektrometer (6) integriert ist und die Ausgänge des Mach-Zehnder-Interferometers (56) die Eingangslichtbündel (61; 62) darstellen.

12. Anordnung nach Anspruch 1, dadurch gekennzeichnet, daß
die Interferometeranordnung (5) aus Lichtleitfasern und Faserkopplern als optische Teiler (51; 52) aufgebaut ist.

13. Anordnung nach Anspruch 12, dadurch gekennzeichnet, daß
die Lichtleitfasern Monomodefasern sind.

14. Anordnung nach Anspruch 1, dadurch gekennzeichnet, daß
die Interferometeranordnung (5) mindestens in einem Interferometerarm (53; 54) einen optischen Phasenmodulator (55) enthält.

15. Anordnung nach Anspruch 14, dadurch gekennzeichnet, daß
als Phasenmodulator (55) ein elektro-optischer Modulator eingesetzt ist.

16. Anordnung nach Anspruch 15, dadurch gekennzeichnet, daß
der Phasenmodulator (55) mit einer Zweifrequenz-Sinusmodulation ansteuerbar und auf einem gemeinsamen Vielfachen der zwei Modulationsfrequenzen auswertbar ist.

17. Anordnung nach Anspruch 14, dadurch gekennzeichnet, daß
in beiden Interferometerarmen (53; 54) je ein Phasenmodulator (55; 56) angeordnet ist, wobei die Phasenmodulatoren (55; 56) piezoelektrische Faserstrecker (58) zur Realisierung eines symmetrischen Grundaufbaus der Interferometerarme (53; 54) sind und der eine Phasenmodulator (55) im Gegentakt zum anderen Phasenmodulator (56) angesteuert wird.

18. Anordnung nach Anspruch 1, dadurch gekennzeichnet, daß
die erste Empfängeranordnung (64) eine CCD-Zeile (67) ist.

19. Anordnung nach Anspruch 1, dadurch gekennzeichnet, daß
die zweite Empfängeranordnung (65) in Anzahl, Position und Breite der Lichteintrittsflächen ihrer Elemente an die Reflexe der unterschiedlichen optischen Fasergitter (4) angepaßt ist, wobei dabei zusätzlich die erwarteten meßgrößenabhängigen Schwankungsbreiten der Wellenlängen der Fasergitterreflexe berücksichtigt sind.

20. Anordnung nach Anspruch 19, dadurch gekennzeichnet, daß
die zweite Empfängeranordnung (65) ein Photodiodenarray (68) mit speziell hergestellter Verteilung und Größe der lichtempfindlichen Elemente ist.

21. Anordnung nach Anspruch 19, dadurch gekennzeichnet, daß
die zweite Empfängeranordnung (65) ein Photodiodenarray (68) mit regelmäßiger Verteilung und Größe der lichtempfindlichen Elemente ist, wobei nur bestimmte Elemente zur Auswertung der Fasergitterreflexe genutzt werden.

22. Anordnung nach Anspruch 19, dadurch gekennzeichnet, daß
zum Zwecke der Anpassung an die Gegebenheiten der Fasergitterreflexe optische Lichtleitfasern (69) zur Einkopplung der Fasergitterreflexe auf die zweite Empfängeranordnung (65) vorhanden sind, wobei optische Fasern (69) mit ihren Durchmessern und Abständen auf die Anzahl, Position und Größe der Fasergitterreflexe angepaßt sind, die Lichteintrittsflächen der Fasern (69) in der durch das abbildende Reflexionsgitter (66) vorgegebenen Empfängerebene angeordnet und ihre Lichtaustrittsflächen auf ein beliebig positioniertes lineares Photodiodenarray (68) gerichtet sind.

23. Anordnung nach Anspruch 22, dadurch gekennzeichnet, daß
die zweite Empfängerzeile (65) eine Zeile mit regelmäßig angeordneten Elementen, vorzugsweise eine reguläre Photodiodenzeile, ist.

Fig. 1

Fig. 2

Fig. 3

Fig. 4

Fig. 5